Europäisches Patentamt

European Patent Office

Office européen des brevets

(11) Veröffentlichungsnummer: **0 470 470 A2**

# EUROPÄISCHE PATENTANMELDUNG

(21) Anmeldenummer: **91112665.4**

(22) Anmeldetag: **27.07.91**

(51) Int. Cl.5: **F16B 13/10**, F16B 13/06

(30) Priorität: **07.08.90 DE 4024963**

(43) Veröffentlichungstag der Anmeldung:
**12.02.92 Patentblatt 92/07**

(84) Benannte Vertragsstaaten:
**AT BE CH DE DK ES FR GB GR IT LI NL SE**

(71) Anmelder: **Adolf Würth GmbH & Co. KG
Maienweg 10
W-7118 Künzelsau(DE)**

(72) Erfinder: **Steck, Otto
Erbweg 11
W-7119 Forchtenberg(DE)**

(74) Vertreter: **Patentanwälte RUFF, BEIER und
SCHÖNDORF
Neckarstrasse 50
W-7000 Stuttgart 1(DE)**

(54) **Dübel mit einer Dübelhülse.**

(57) Bei einem Dübel, der durch Aufbringen eines Drehmoments festgelegt wird, ist vorgesehen, den Betätigungskopf (5) aus zwei durch eine Sollbruchstelle (13) getrennten Teilen (10, 11) aufzubauen. Zum Festziehen des Dübels wird mit einem Schraubenschlüssel an dem durch die Sollbruchstelle (13) verbundenen Kopfteil (11) angefaßt, so daß bei Erreichen des von den Zulassungsbestimmungen vorgeschriebenen Drehmoments die Sollbruchstelle (13) reißt.

FIG. 1

EP 0 470 470 A2

Die Erfindung geht aus von einem Dübel mit einem aufweitbaren Dübelelement, der durch Aufbringen eines Drehmoments aufspreizbar ist.

Bei Dübeln mit einer bauaufsichtlichen Zulassung ist im einzelnen festgelegt, wie die Dübel anzubringen sind. Bei Dübeln, bei denen das Aufspreizen und damit Festlegen im Bohrloch durch Aufbringen eines Drehmoments erreicht wird, also z.B. durch Schrauben, verlangen die Zulassungsbestimmungen, daß die Dübel mit einem entsprechenden Drehmomentenschlüssel montiert werden. Sie verlangen weiterhin, daß die korrekte Montage des Dübels auch nachträglich festgestellt werden kann. Dies kann bei dieser Art von Dübeln dadurch geschehen, daß wieder mit einem Drehmomentenschlüssel überprüft wird, ob sich das vorgeschriebene Drehmoment wieder aufbringen läßt. Nicht festgestellt werden kann aber, ob der Dübel mit einem wesentlich höheren Drehmoment verankert wurde.

Die Bestimmungen schreiben also vor, wie bei der Montage vorzugehen ist, und daß dies auch nachträglich überprüft werden kann.

Es ist bereits ein Dübel bzw. Schwerlastanker vorgeschlagen worden, bei dem der Schraubenkopf von einer an ihrer Außenseite als Sechskantmutter ausgebildeten Haube abgedeckt ist, die durch drei exzentrisch angeordnete, in Axialrichtung verlaufende Stifte mit dem Schraubenkopf verbunden ist. Bei Erreichen des vorgeschriebenen Drehmoments scheren die Stifte ab. Die Kappe wird abgenommen und die Tatsache, daß das Anzugsdrehmoment aufgebracht wurde, kann aus dem Fehlen der Kappe erkannt werden.

Diese Art einer Drehmomentbegrenzung hat den Nachteil, daß in den Schraubenkopf drei axiale Bohrungen eingebracht werden müssen, in die die Zapfen eingesetzt werden können. Darüber hinaus ist zu beachten, daß die Zapfen, die getrennte Teile sind, in den Bohrlöchern bleiben, so daß zur Verhinderung von Korrosion o.dgl. eine Anpassung der Stifte an das Material des Schraubenkopfes erfolgen muß.

Der Erfindung liegt die Aufgabe zugrunde, eine einfache, kostengünstige und leicht anzuwendende Möglichkeit zu schaffen, die die Einhaltung eines vorgeschriebenen Drehmomentes gewährleistet und bei eingesetztem Dübel kontrolliert werden kann.

Zur Lösung dieser Aufgabe schlägt die Erfindung einen Dübel mit den Merkmalen des Anspruchs 1 vor. Weiterbildungen sind Gegenstand der Unteransprüche.

Der Dübel kann beispielsweise so aufgebaut sein, daß das Schraubelement einen Schraubbolzen mit einem einstückig angeformten Schraubenkopf ist, der in ein mit einem Gewinde versehenes, an der Außenseite etwa kegelstumpfförmig ausgebildetes Teilelement eingreift, das bei axialer Verschiebung zur Aufweitung der Hülse führt. In diesem Fall ist der Schraubenkopf der Betätigungskopf, an dem der Monteur mit dem Schraubenschlüssel angreift.

Ein fast ähnlich aufgebauter Dübel kann auch so aufgebaut sein, daß das Schraubelement eine Gewindestange ist, die mit Hilfe einer auf sie aufgeschraubten Mutter axial bewegt wird. In diesem Falle wäre die Mutter der Betätigungskopf.

Der von der Erfindung vorgeschlagene Dübel wird so verwendet, daß der Monteur den Dübel nach Vorschrift der bauaufsichtlichen Zulassung in das vorher gebohrte Bohrloch einsetzt. Zum Festziehen verwendet er nun einen auf den Betätigungskopf abgestimmten Schlüssel, beispielsweise einen Ringschlüssel für einen üblichen Sechskantkopf, und greift an dem Kopfteil des Betätigungskopfes an. Durch ständiges Aufbringen eines Drehmomentes wird der Dübel angezogen und festgelegt, bis das vorgeschriebene Drehmoment erreicht wird. Sobald dies überschritten wird, schert die Sollbruchstelle ab und der Kopfteil löst sich. Der Monteur weiß, daß der Dübel jetzt richtig montiert ist. Hierzu benötigt er keinen Drehmomentenschlüssel mehr. An dem Fehlen des Kopfteils erkennt ein Kontrolleur, daß der Dübel richtig gesetzt ist.

Es ist selbstverständlich auch möglich, an dem verbleibenden Halteteil eine Farbmarkierung o.dgl. anzubringen, die das Erkennen erleichtert.

Wenn der Dübel als Sicherheitsdübel verwendet werden soll, beispielsweise zum Festdübeln von Fenstergittern o.dgl., bei denen ein unbefugtes Lösen also nicht mehr möglich sein soll, kann erfindungsgemäß vorgesehen sein, daß der verbleibende Halteteil keine Schlüsselflächen mehr aufweist. Dann läßt sich ein nachträgliches Entfernen nur mit großem Aufwand, beispielsweise einem Abmeißeln, durchführen.

Für normale Fälle, in denen ein Abschrauben auch wieder möglich sein soll, kann erfindungsgemäß vorgesehen sein, daß der Halteteil des Betätigungskopfes mit Schlüsselflächen versehen ist. Dabei kann es sich um Schlüsselflächen der gleichen Art handeln, oder auch um unterschiedliche Schlüsselflächen. Unter Schlüsselflächen sind alle Arten der Ausbildung von Schraubenköpfen oder Muttern zu verstehen, die ein Ansetzen eines Werkzeugs ermöglichen. Es muß sich also nicht nur um die üblichen Sechskantköpfe handeln, sondern auch die auf dem Gebiet der Schrauben bekannten anderen Kopfausbildungen sind hierunter zu verstehen.

Eine Möglichkeit, die Sollbruchstelle darzustellen, besteht erfindungsgemäß darin, daß der Betätigungskopf einstückig ausgebildet ist und die Sollbruchstelle durch eine Querschnittsverminderung gebildet wird. Dies hat den Vorteil, daß Korrosionsprobleme o.dgl. natürlich nicht auftreten. Auch ist die Herstellung vereinfacht, da kein Zusammenfügen mehrerer Teile erforderlich ist.

Die Erfindung schlägt vor, daß bei einem einstückigen Betätigungskopf dieser aus einem Material hergestellt werden kann, das bei Beanspruchung auf Scherung geringe Fließeigenschaften aufweist. Anders ausgedrückt, soll ein Material verwendet werden, bei dem die Grenze zwischen elastischer Verformung des Materials und Abscheren des Materials sehr scharf definiert ist. Damit kann erreicht werden, daß die Sollbruchstelle bei Erreichen des gewünschten Drehmoments schnell und sauber abschert. Ein für dieses Merkmal besonders geeignetes Material ist Bronze.

Eine andere Möglichkeit zur Darstellung einer Sollbruchstelle besteht erfindungsgemäß darin, daß der Halteteil und der Kopfteil des Betätigungskopfes miteinander verbunden sind und die Verbindungsstelle die Sollbruchstelle bildet. Die Verbindung kann beispielsweise eine Verschweißung sein, z.B. eine Punktverschweißung. Auch in diesem Fall verringern sich die Herstellungskosten und der Aufwand zur Herstellung, da nur zwei Teile vorhanden sind, die durch einen einfachen Vorgang miteinander verbunden werden können. Die Schweißverbindung kann dabei durch ihre Größe so abgestimmt werden, daß sie zu einem relativ genauen Lösen der Verbindung bei dem gewünschten Drehmoment führt.

Anstelle einer Verschweißung kann selbstverständlich auch eine Verlötung verwendet werden.

Insbesondere schlägt die Erfindung jedoch vor, daß die Verbindung zum Verbinden der beiden Teile eine Verklebung ist. Hier kann durch Auswahl des Klebers und die von dem Kleber benetzten Teile das Bruchdrehmoment sehr genau eingestellt werden.

In Weiterbildung schlägt die Erfindung vor, daß die Verbindung zwei axiale Stirnflächen miteinander verbinden kann. Hier lassen sich die einzelnen Teile besonders einfach herstellen.

Erfindungsgemäß kann jedoch auch mit Vorteil vorgesehen sein, daß die Verbindung zwei radiale Oberflächen miteinander verbindet. Selbstverständlich könnten auch beide Verbindungsarten an einer Verbindung vorgesehen sein.

Insbesondere bei Verwendung eines druckempfindlichen Klebers ist die Möglichkeit vorzuziehen, daß die beiden zu verbindenden Teile sich in Axialrichtung direkt berühren. Axialkräfte, die zu einer Druckbeanspruchung der Klebeverbindung führen könnten, werden daher mechanisch von den Teilen selbst aufgebracht. Der Kleber kann in einem flachen Hohlraum zwischen Stirnflächen oder auch in einem flachen Hohlraum zwischen zylindrischen Mantelflächen vorhanden sein.

Wenn der Betätigungskopf als Mutter ausgebildet ist, so schlägt die Erfindung vor, daß das Innengewinde nur in dem Halteteil ausgebildet ist. Auf diese Weise kann der Kopfteil bei Zerstörung der Sollbruchstelle entfernt werden, so daß die Kontrolle des richtig gesetzten Dübels an dem Fehlen des abgescherten Teils erkennbar ist.

Es ist selbstverständlich auch möglich, falls dies unter bestimmten Bedingungen gewünscht wird, das Gewinde auch in dem Kopfteil auszubilden. In diesem Fall wirkt bei Zerstörung der Sollbruchstelle der Kopfteil als Kontermutter, so daß der Monteur durch plötzliches Ansteigen des Widerstandes ebenfalls erkennt, daß das Drehmoment erreicht ist. In speziellen Fällen, wo eine Kontermutter erwünscht wird, kann diese Ausbildung bevorzugt sein.

Die Erfindung schlägt in Weiterbildung vor, daß der Betätigungskopf des Dübels so ausgebildet sein kann, daß bei intakter Sollbruchstelle der Zugriff auf die Schlüsselflächen des Halteteils erschwert oder unmöglich ist. Auf diese Weise soll dem Monteur ein Hinweis gegeben werden, wie er den Dübel zu montieren hat.

Beispielsweise kann vorgesehen sein, daß der Kopfteil den Halteteil haubenartig umgibt.

Eine andere von der Erfindung vorgeschlagene Möglichkeit besteht darin, zwischen dem Kopfteil und dem Halteteil eine im Durchmesser vergrößerte Scheibe anzuordnen. Wenn der Monteur den Kopfteil dann mit einem Ringschlüssel oder einem Steckschlüssel bearbeitet, kann er nicht bis zum Halteteil abgleiten. Auch bei Verwendung eines Schraubenschlüssels müßte er, um den Halteteil zu erwischen, den Gabelschlüssel seitlich bewußt am Halteteil einschieben.

Eine weitere Möglichkeit besteht darin, daß die Schlüsselflächen des Halteteils schmaler sind als die Dicke eines üblichen Gabelschlüssels. Dann würde der Gabelschlüssel erst nach Abbrechen des Kopfteils verwendbar sein.

Eine nochmals weitere Möglichkeit besteht erfindungsgemäß darin, daß der Halteteil und der Kopfteil unterschiedliche Schlüsselweiten bzw. Nenngrößen aufweisen. Dann weiß der Monteur beispielsweise, daß er zum Festziehen des Dübels einen bestimmten Schraubenschlüssel benötigt, während zum Lösen eine andere Schlüsselweite erforderlich wäre.

Insbesondere kann dabei vorgesehen sein, daß die Schlüsselweite des Kopfteils größer ist als die des Halteteils.

Eine weitere Möglichkeit, um ein versehentliches Angreifen an dem Halteteil zu verhindern, kann darin bestehen, daß die Schlüsselflächen des Halteteils und des Kopfteils um einen von der Teilung verschiedenen Winkel versetzt angeordnet sind. Bei einem üblichen Sechskantkopf würde also eine Versetzung um 30° besonders geeignet sein, da sie ein Übergreifen des Ringschlüssels von dem Kopfteil auf den Halteteil am besten verhindert.

Zur optischen Kontrolle, daß nach Erreichen des Drehmoments der Kopfteil entfernt wurde, kann erfindungsgemäß vorgesehen sein, daß als Kleber zum Herstellen der Sollbruchstelle ein Kleber mit einer auffallenden Farbe verwendet wird. Nach dem Abreißen der durch den Kleber gebildeten Sollbruchstelle bleibt an dem Halteteil eine Schicht Kleber zurück, die aufgrund ihrer auffallenden Farbe dann als Anzeichen für den richtig gesetzten Dübel dienen kann. Bei der Kontrolle des gesetzten Dübels reicht dann ein kurzer Blick aus, die Verwendung eines Drehmomentenschlüssels ist nicht mehr erforderlich.

Weitere Merkmale, Einzelheiten und Vorzüge der Erfindung ergeben sich aus den Ansprüchen, der folgenden Beschreibung bevorzugter Ausführungsformen der Erfindung sowie anhand der Zeichnung. Hierbei zeigen:

Fig. 1 eine teilweise geschnittene Seitenansicht eines Dübels nach der Erfindung;

Fig. 2 eine Seitenansicht eines als Mutter ausgebildeten Betätigungskopfes;

Fig. 3 in vergrößertem Maßstab einen Schnitt durch den Betätigungskopf der Fig. 2;

Fig. 4 eine Seitenansicht eines Schraubbolzens für einen erfindungsgemäßen Dübel;

Fig. 5 eine teilweise geschnittene Seitenansicht eines gegenüber der Fig. 4 geänderten Schraubbolzens;

Fig. 6 eine der Fig. 5 entsprechende Darstellung bei einer nochmals weiteren Ausführungsform;

Fig. 7 eine Aufsicht auf einen Befestigungskopf von seiner Stirnseite her;

Fig. 8 eine der Fig. 4 entsprechende Darstellung bei einer nochmals weiteren Ausführungsform.

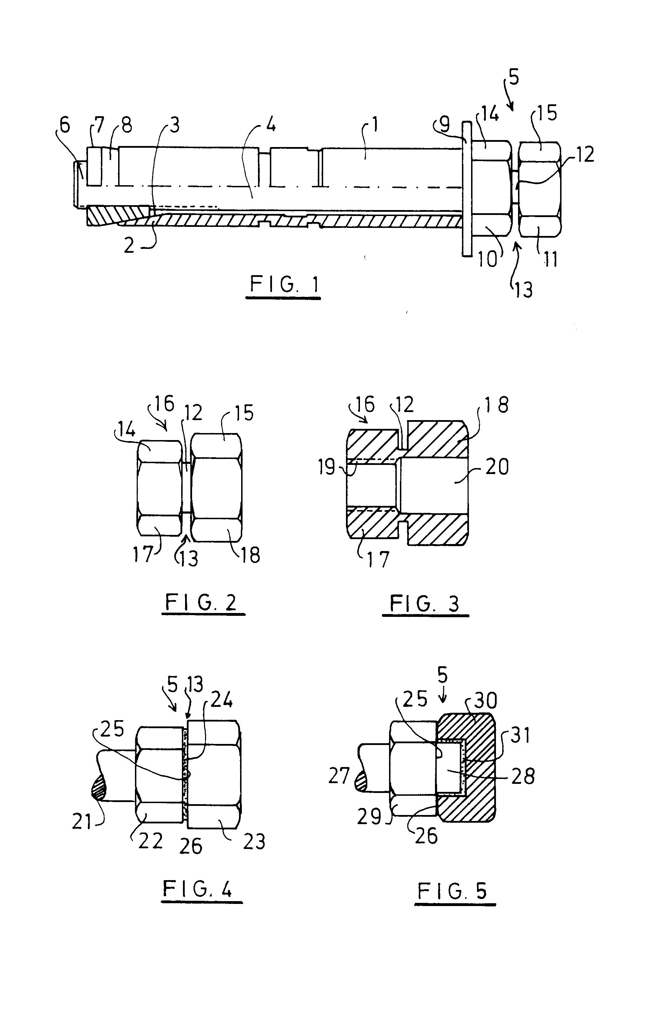

Fig. 1 zeigt, teilweise im Längsschnitt, eine Seitenansicht eines Dübels. Der Dübel enthält eine Dübelhülse 1, die in ihrem Endbereich 2 an ihrer Innenseite eine Kegelfläche 3 aufweist, die sich in Richtung auf das Ende hin erweitert. Die Dübelhülse 1 enthält mindestens einen Längsschlitz, der ihr Aufweiten ermöglicht. In die Dübelhülse 1 eingesetzt ist ein Schraubbolzen 4, dessen Außendurchmesser etwa dem Innendurchmesser der Dübelhülse 1 entspricht. Der Schraubbolzen 4 enthält einen außerhalb des Dübels angeordneten Betätigungskopf 5. Auf das dem Betätigungskopf 5 entgegengesetzte Ende 6 des Schraubbolzens 4 ist ein mit einem Innengewinde versehenes Keilelement 7 aufgeschraubt, dessen Außenform etwa kegelstumpfförmig ausgebildet ist. Die Kegelfläche 8 wirkt mit der Kegelfläche 3 der Dübelhülse 1 derart zusammen, daß bei Axialverschiebung des Keilelementes 7 die Dübelhülse 1 aufgeweitet und damit der Dübel in dem Bohrloch festgelegt wird. Die Axialverschiebung des Keilelementes 7 geschieht durch Verdrehen des Betätigungskopfes 5.

Was bei der Ausführungsform der Fig. 1 für einen Schraubbolzen 4 ausgesagt wurde, gilt in gleicher Weise auch für eine Ausführungsart, bei der anstelle eines Schraubbolzens 4 ein Gewindeschaft verwendet wird, der mit einem Betätigungskopf 5 in Form einer Mutter zusammenwirkt.

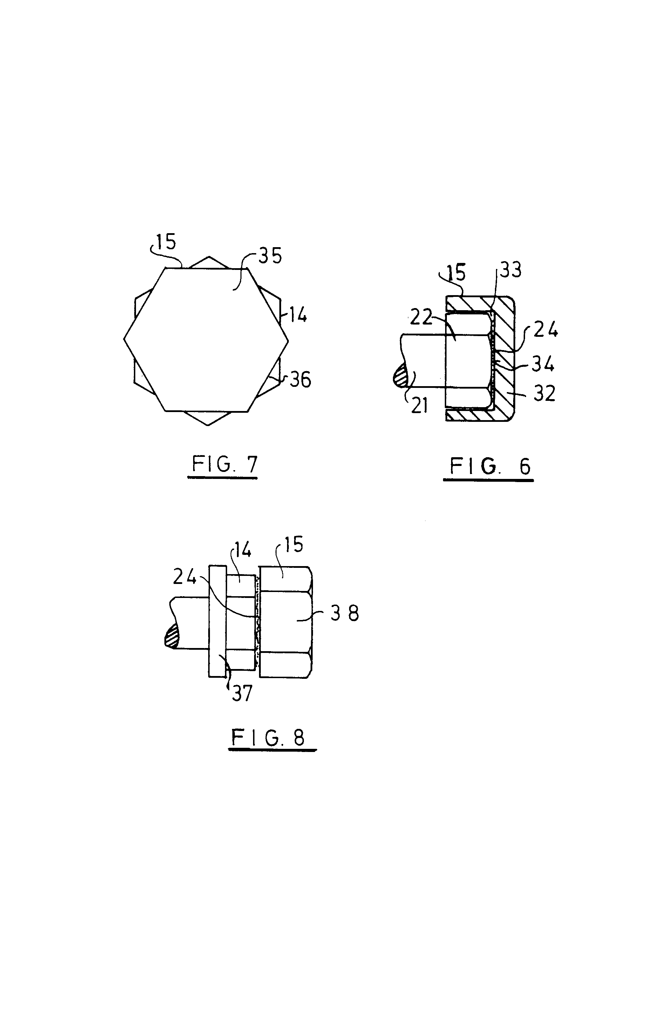

Erfindungsgemäß ist der Betätigungskopf 5 des Schraubbolzens 4 aus zwei Teilen aufgebaut, einem direkt an einer Unterlegscheibe anliegenden Halteteil 10 und einem sich zum freien äußeren Ende hin anschließenden Kopfteil 11. Beide Teile sind durch eine Querschnittsverminderung 12 voneinander getrennt, die eine Sollbruchstelle 13 bildet. Im dargestellten Ausführungsbeispiel weisen sowohl der Halteteil 10 als auch der Kopfteil 11 die übliche Sechskantform auf, bei dem also die Schlüsselflächen 14, 15 unter einem Winkel von 120° zueinander verlaufen. Ein Querschnitt durch Kopfteil 11 und Halteteil 10 würde also die Form eines regelmäßigen Sechsecks aufweisen, siehe auch Fig. 7.

Der Dübel der Ausführungsform der Fig. 1 wird folgendermaßen verwendet. Nachdem das Bohrloch gebohrt worden ist, wobei auch hier baurechtliche Bestimmungen zu beachten sind, wird der Dübel unter Zwischenlage des zu befestigenden Gegenstandes in das Bohrloch eingesetzt, bis die Unterlegscheibe 9 auf dem zu befestigenden Gegenstand und dieser auf der Oberfläche der Wand bündig aufliegt. Anschließend greift der Monteur mit einem Schraubenschlüssel an den Schlüsselflächen 15 des Kopfteils 11 an. Hierzu wird beispielsweise ein Ringschlüssel verwendet. Mit dessen Hilfe wird der Schraubbolzen 4 gedreht, so daß das Keilelement 7 sich axial verschiebt und die Dübelhülse 1 aufweitet. Der Monteur verdreht den Kopfteil 11 so lange, bis die Sollbruchstelle 13 das zu übertragende Drehmoment nicht mehr übertragen kann und abschert. Der Kopfteil 11 bricht ab und der Monteur ist fertig. Daß beim Befestigen des Dübels das richtige Drehmoment erreicht wurde, kann bei einer Inspektion daran erkannt werden, daß der Kopfteil 11 fehlt.

Erfindungsgemäß ist die durch die Querschnittsverminderung 12 gebildete Sollbruchstelle 13 derart ausgebildet, daß sie genau bei dem in den Zulassungsbestimmungen für den speziellen Dübel enthaltenen Drehmomentwert abschert. Diese Ausbildung ist aufgrund der bekannten Materialeigenschaften und der Geometrie möglich.

Während die Fig. 1 einen Betätigungskopf 5 in Form des Kopfes eines Schraubbolzens darstellt, zeigt Fig. 2 einen Betätigungskopf in Form einer Mutter 16. Die Mutter 16 enthält wiederum zwei durch eine Querschnittsverminderung 12 getrennte einstückige Teile, nämlich einen Halteteil 17 und einen Kopfteil 18. Wie der Längsschnitt der Fig. 3 zeigt, enthält die Mutter 16 eine durchgehende Längsbohrung, die innerhalb des Halteteils 17 einen verkleinerten Durchmesser mit einem angedeuteten Gewinde 19 aufweist. Der im Halteteil 18 liegende Teil 20 der Längsbohrung weist kein Innengewinde auf und hat einen vergrößerten Durchmesser, so daß die Mutter 16 über den Gewindestift geschraubt werden kann, ohne daß der Kopfteil 18 dies verhindert.

Die Querschnittsverminderung 12, die durch einen Einstich von der Außenseite her gebildet ist, bildet wiederum eine Sollbruchstelle 13.

Während bei der Ausführungsform der Fig. 1 ein Installateur mit seinem Schraubenschlüssel auch an den Schlüsselflächen 14 des Halteteils 10 angreifen könnte, da dort die beiden Halteteile Schlüsselflächen 14, 15 für gleiche Schlüsselweiten aufweisen, ist bei der Ausführungsform nach Fig. 2 und 3 die Schlüsselweite für die Schlüsselflächen 14 des Halteteils 17 kleiner als für die Schlüsselflächen 15 des Kopfteils 18. Wenn der Installateur hier einen Ringschlüssel verwendet, so kann er nur einen Ringschlüssel verwenden, der für die Schlüsselflächen 15 des Kopfteils 18 paßt. Er wird auf diese Weise also bei den meist verwendeten Schlüsselarten daran gehindert, an dem Halteteil 14 anzugreifen. Ein Festdrehen des Dübels dadurch, daß mit dem Schlüssel gleich an dem Halteteil 10 bzw. 17 angefaßt wird, würde natürlich die Sollbruchstelle 13 nicht zum Ansprechen bringen.

Bei der Ausführungsform nach Fig. 2 und 3 wäre es im Prinzip auch möglich, das Gewinde 19 durch beide Teile 17, 18 hindurchgehen zu lassen. In diesem Fall würde bei Erreichen des die Sollbruchstelle 13 auslösenden Drehmoments der Kopfteil 18 sich noch etwas weiter drehen und damit in Art einer Kontermutter den Halteteil 17 festlegen. In Anwendungsfällen, in denen eine Kontermutter erwünscht wird, kann dies selbstverständlich so gemacht werden.

Bei den Ausführungsformen nach Fig. 1 bis 3 waren die beiden Teile des Betätigungskopfes 5 jeweils einstückig und die Sollbruchstelle 13 durch eine Querschnittsverminderung gebildet. Als Material für diese Art der Ausbildung kommt insbesondere Bronze in Frage, also ein Material, bei dem bei Erreichen einer bestimmten Scherbeanspruchung das Material sehr schnell abschert.

Fig. 4 zeigt eine Ausführungsform für einen Betätigungskopf eines Schraubbolzens 21, bei dem ein kleinerer Halteteil 22 mit einem getrennt von diesem hergestellten größeren Kopfteil 23 durch eine Schicht Kleber 24 miteinander verbunden sind. Die Schicht Kleber verbindet die von dem Schaft des Schraubbolzens 21 weggerichtete Stirnfläche 25 des Haltekopfes mit der ihr zugewandten Stirnfläche 26 des Kopfteils 23. Bei der Ausführungsform nach Fig. 4 kann ein normaler Schraubbolzen 21 ohne Anpassung an die Erfindung verwendet werden, wobei bei Herstellung des Dübels dieser mit dem Kopfteil 23 nach Aufbringen der Schicht Kleber 24 verbunden wird. Hier bildet also die Schicht Kleber 24 die Sollbruchstelle 13.

Unter den verschiedenen Klebstoffen gibt es auch solche, die an sich sehr gut geeignet sind, die aber wenig druckempfindlich sind. Bei solchen Klebern kann die Ausführungsform des Betätigungskopfes 5 nach Fig. 5 Anwendung finden. Hier enthält ein üblicher Schraubbolzen 27 an der von dem Schaft abgewandten Seite seines Kopfes mittig einen zylindrischen Ansatz 28. Der Ansatz 28 weist eine gegenüber dem Außendurchmesser des den Halteteil 29 bildenden Bolzenkopfs verkleinerten Durchmesser auf.

Mit Hilfe eines Klebers verbunden ist mit dem Halteteil 29 ein Kopfteil 30, der ähnlich aufgebaut ist wie der Kopfteil 23 bei der Ausführungsform nach Fig. 4, jedoch auf seiner dem Halteteil 29 zugewandten Stirnfläche 26 eine Ausnehmung 31 aufweist. Die Tiefe der Ausnehmung ist etwas größer als die axiale Länge des Ansatzes 28, und auch der Durchmesser der Ausnehmung 31 kann größer sein als der Durchmesser des Ansatzes 28. Da der Ansatz 28 kürzer ist als die Ausnehmung 31 tief, kann der Kopfteil 30 so aufgesetzt werden, daß er mit seiner Stirnfläche 26 an der gegenüberliegenden Stirnfläche 25 des Halteteils 29 direkt anliegt. In den Zwischenraum zwischen Ansatz 28 und Innenwandung der Ausnehmung 31 kann der Kleber vor Zusammensetzung eingebracht werden. Die Abstände können so bemessen werden, daß genau die richtige Menge Kleber zur Erreichung des Abscherens bei dem bestimmten Drehmoment eingebracht werden kann. In axialer Richtung erfolgt keine Druckbeaufschlagung des Klebers. Das gleiche kann auch in radialer Richtung durch Zentrierrippen o.dgl. erreicht werden, die entweder an dem Ansatz 28 oder an der Innenseite der Ausnehmung 31 angebracht sind. Die Klebverbindung ist bei der Ausführungsform nach Fig. 5 sowohl zwischen Stirnflächen, nämlich der Stirnfläche des Ansatzes 28 und dem Boden der Ausnehmung 31, als auch zwischen radialen Flächen vorhanden, nämlich der Zylinderfläche des Ansatzes 28 und der Wand der Ausnehmung 31.

Bei der Ausführungsform nach Fig. 6 ist wieder ein ganz normaler Schraubbolzen 21 vorhanden. Über seinen den Halteteil 22 bildenden Kopf ist der Kopfteil 32 haubenartig übergesetzt, wobei die Ausnehmung 33 des Halteteils 32 zylindrisch ausgebildet ist. Der Innendurchmesser dieser Ausnehmung 33 entspricht dem Maximaldurchmesser des sechskantigen Halteteils 22. Die Schicht Klebstoff 24 ist zwischen der Stirnseite 25 des Schraubbolzens und dem Boden 34 der Ausnehmung 33 angeordnet. Bei der Ausführungsform nach Fig. 6 greift der Installateur mit seinem Schlüssel an der Außenseite des Halteteils 32 an, die ebenfalls Schlüsselflächen 11 aufweist.

Während bei den Ausführungsformen nach Fig. 1 bis 5 die Schlüsselflächen 14 des Halteteils und die Schlüsselflächen 15 des jeweiligen Kopfteils parallel zueinander verliefen, also die beiden Sechskante nicht drehversetzt zueinander waren, ist das die Außenform des Halteteils 35 bildende Sechseck gegenüber dem die Außenkanten und Schlüsselflächen 14 des Halteteils 36 bildende Sechseck gegenseitig drehversetzt, und zwar um einen Winkel von 30°. Greift der Installateur mit einem Ringschlüssel an dem Kopfteil 35 an, so kann er diesen nicht zum Halteteil 36 verschieben. Das gleiche gilt auch für einen Gabelschlüssel. Er müßte, um mit dem Gabelschlüssel den Halteteil 36 ergreifen zu können, den Gabelschlüssel seitlich einschieben.

Um auch ein derartiges seitliches Einschieben unmöglich zu machen, kann erfindungsgemäß vorgesehen sein, daß die Schlüsselflächen 14 des Halteteils 37 so schmal sind, daß ein üblicher Gabelschlüssel so lange nicht angesetzt werden kann, wie der Kopfteil 38 noch befestigt ist. Ein Beispiel hierfür ist in Fig. 8 dargestellt, bei dem Kopfteil 38 und Halteteil 37 durch eine Schicht Klebstoff 24 miteinander verbunden sind. Der Kopfteil 38 ist im Durchmesser größer, so daß dann, wenn die Schlüsselflächen 14 so schmal sind, ein Gabelschlüssel nicht eingeschoben werden kann.

Wenn Kopfteil und Halteteil den gleichen Durchmesser und keine Winkelversetzung zueinander aufweisen, kann beispielsweise auch vorgesehen sein, zwischen beiden Teilen eine im Durchmesser vergrößerte Scheibe anzuordnen, was dann bei entsprechender Ausbildung der Schlüsselflächen 14 ebenfalls das Einschieben eines Gabelschlüssels verhindern könnte.

**Patentansprüche**

1. Dübel mit einem aufweitbaren Dübelelement, insbesondere einer Dübelhülse (1), einem Schraubelement (4) zum Aufweiten des aufweitbaren Elements und einem mit dem Schraubelement (4) zusammenwirkenden Betätigungskopf (5), der durch Übertragung eines Drehmoments die Festlegung des Dübels bewirkt, dadurch gekennzeichnet, daß der Betätigungskopf (5) einen sich direkt oder indirekt an der Wand abstützenden Halteteil (10, 17, 22, 29, 36, 37) und einen mit diesem über eine Sollbruchstelle (13) verbundenen bzw. getrennten, mit Schlüsselangriffsflächen (15) versehenen Kopfteil (11, 18, 23, 30, 35, 38) aufweist, wobei die Sollbruchstelle (13) derart ausgebildet ist, daß sie bei Erreichen eines bestimmten Drehmoments abschert.

2. Dübel nach Anspruch 1, dadurch gekennzeichnet, daß der Halteteil (10, 17, 22, 29, 36, 37) des Betätigungskopfes (5) mit Schlüsselflächen (14) versehen ist.

3. Dübel nach Anspruch 1 oder 2, dadurch gekennzeichnet, daß der Betätigungskopf (5) einstückig ausgebildet ist und die Sollbruchstelle (13) durch eine Querschnittsverminderung (12) gebildet wird.

4. Dübel nach Anspruch 3, dadurch gekennzeichnet, daß der Betätigungskopf (5) aus einem Material mit niedriger Fließeigenschaft bei Beanspruchung auf Scherung besteht.

5. Dübel nach Anspruch 3 oder 4, dadurch gekennzeichnet, daß der Betätigungskopf (5) aus Bronze besteht.

6. Dübel nach Anspruch 1 oder 2, dadurch gekennzeichnet, daß der Halteteil (22, 29, 37) und der Kopfteil (23, 30, 32, 38) des Betätigungskopfes (5) miteinander verbunden sind und die Verbindungsstelle die Sollbruchstelle (13) bildet.

7. Dübel nach Anspruch 6, dadurch gekennzeichnet, daß die Verbindung eine Verschweißung aufweist.

8. Dübel nach Anspruch 6 oder 7, dadurch gekennzeichnet, daß die Verbindung eine Verlötung aufweist.

9. Dübel nach einem der Ansprüche 6 bis 8, dadurch gekennzeichnet, daß die Verbindung eine Verklebung aufweist.

10. Dübel nach einem der Ansprüche 6 bis 9, dadurch gekennzeichnet, daß die Verbindung zwei axiale Stirnflächen (25, 26, 34) miteinander verbindet.

11. Dübel nach einem der Ansprüche 6 bis 10, dadurch gekennzeichnet, daß die Verbindung zwei radiale Oberflächen miteinander verbindet.

12. Dübel nach einem der Ansprüche 9 bis 11, dadurch gekennzeichnet, daß bei Verwendung eines druckempfindlichen Klebers die beiden zu verbindenden Teile (29, 30) sich in Belastungsrichtung direkt berühren.

13. Dübel nach einem der vorhergehenden Ansprüche, dadurch gekennzeichnet, daß bei einem als Mutter (16) ausgebildeten Betätigungskopf (5) das Innengewinde (19) nur in dem Halteteil (17) ausgebildet ist.

14. Dübel nach einem der Ansprüche 2 bis 13, dadurch gekennzeichnet, daß der Betätigungskopf (5) so ausgebildet ist, daß bei intakter Sollbruchstelle der Zugriff auf die Schlüsselflächen (14) des Halteteils (10, 17, 22, 29, 36, 37) erschwert oder unmöglich ist.

15. Dübel nach einem der vorhergehenden Ansprüche, dadurch gekennzeichnet, daß der Kopfteil (32) den Halteteil (22) haubenartig umgibt.

16. Dübel nach einem der Ansprüche 1 bis 14, dadurch gekennzeichnet, daß zwischen dem Kopfteil und dem Halteteil eine im Durchmesser vergrößerte Scheibe angeordnet ist.

17. Dübel nach einem der vorhergehenden Ansprüche, dadurch gekennzeichnet, daß die Schlüsselflächen (14) des Halteteils (37) schmaler sind als die Dicke eines üblichen Gabelschlüssels und/oder der Halteteil (17, 22, 29, 37) und der Kopfteil (18, 23, 30, 38) unterschiedliche Nenngrößen aufweisen bzw. für unterschiedliche Schlüsselweiten ausgebildet sind, wobei insbesondere die Schlüsselweite des Kopfteils (18, 23, 30, 38) größer ist als die des Halteteils (17, 22, 29, 37).

18. Dübel nach einem der Ansprüche 2 bis 19, dadurch gekennzeichnet, daß die Schlüsselflächen (14) des Halteteils (36) und die Schlüsselflächen (15) des Kopfteils (35) um einen von der Teilung der Schlüsselflächen (14, 15) verschiedenen Winkel versetzt angeordnet sind.

19. Dübel nach einem der Ansprüche 9 bis 18, dadurch gekennzeichnet, daß der Kleber mindestens nach dem Aushärten eine auffallende Farbe aufweist.

FIG. 1

FIG. 2

FIG. 3

FIG. 4

FIG. 5

FIG. 7

FIG. 6

FIG. 8